# EUROPEAN PATENT APPLICATION

(11) **EP 1 282 056 A1**
(43) Date of publication of application: **05.02.2003**
(21) Application number: 01919962.9
(22) Date of filing: 16.04.2001
(51) Int. Cl.: G06F 17/60

(54) **FOREIGN APPLICATION SUPPORTING SYSTEM, FOREIGN APPLICATION SUPPORTING METHOD, FOREIGN APPLICATION SUPPORTING PROGRAM, COMPUTER-READABLE RECORDED MEDIUM ON WHICH FOREIGN APPLICATION SUPPORTING PROGRAM IS RECORDED, FOREIGN APPLICATION SUPPORTING COMPUTER, AND COMPUTER-READABLE/WRITABLE STORAGE MEDIUM**

(30) Priority: 21.04.2000 JP 2000120887
(71) Applicant: OHKAWA, Hiroshi, Aichi-ken 470-0114 (JP)
(72) Inventor: OHKAWA, Hiroshi, Aichi-ken 470-0114 (JP)
(74) Representative: Leson, Thomas Johannes Alois, Dipl.-Ing.
(86) International application number: JP0103251
(87) International publication number: WO01082153

(57) **Abstract**

A foreign application supporting system being characterized in that it is provided with: application information disclosing means for disclosing, after completing a first country application, an outline of the first country application at least upon receiving the provision of information regarding the first country application; and supporter recruiting means for recruiting a supporter who judges, based on the content disclosed by the application information disclosing means, to wish to support a second country application.

Since the second country application is carried out while receiving support from the supporter, even a first country application which a medium- and small-sized corporation and the like being in short of the human and capital resources have carried out, an opportunity expands in which a second country application (foreign application) is done.

## Description

### Technical Field

The present invention relates to a foreign application supporting system for supporting a second country application such as a patent application and the like, a foreign application supporting method, a foreign application supporting program, a computer readable recording medium recording a foreign application supporting program, a computer for supporting a foreign application and a computer readable-and-writable storing medium.

### Background Art

Recently, venture corporations and the like which are growing rapidly by realizing unique concepts (ideas) have come under the spotlight. Since their own technologies, designs, brand powers and so forth become the biggest arms, such venture corporations and so on think of monopolizing intellectual properties on those technologies and the like so as to stand on an advantageous position not only within their own countries but also internationally. As systems for protecting such intellectual properties, there are patent, design and trademark systems and so forth.

Since current intellectual property systems (especially, industrial property right systems) postulate the territoriality principle, when trying to obtain a patent right and the like in foreign countries in addition to in their countries, it is necessary to carry out a patent application and so forth for every country by the manner, language and so on which conform to the system for every country.

However, foreign patent systems and the like are not familiar in general, and are difficult as well. Accordingly, in order to actually carry out a foreign application, professional knowledge of high degree and language ability are required, it is difficult for venture corporations, medium- and small-sized corporations and the like, which have been founded shortly before, to carry out a foreign application on their own terms in view of the human and capital resources. Moreover, even if they use outside agencies such as patent firms and so forth, they are forced to pay a large amount of charges, such as a translation fee, an attorney charge and so on, eventually.

Consequently, even when venture corporations and the like develop original and promising technologies, designs and so forth and complete them, they end up in carrying out a patent application and so on in their countries to obtain domestic rights, and often give up applications to foreign countries and obtaining rights in foreign countries.

Although good technologies and the like exist, when foreign applications are not done, to foreign countries (foreigners) as well, the opportunity for knowing such technologies and so forth has been lost partially so that they cannot be utilized effectively. Namely, when foreign applications are not promoted, it is not preferable in intending international industrial development either.

### Disclosure of the Invention

The present invention has been done in view of such circumstances. Namely, it is an object to provide a foreign application supporting system and the like which support foreign applications regarding good technologies and so forth which are developed by venture corporations and so on, thereby making it possible to expand the opportunity for foreign applications.

As a result of the wholehearted study in order to solve this assignment, the present inventor thought of, based on the information of a first country application, recruiting a supporter who supports its second country application (foreign application), and arrived at completing the present invention.

### (Foreign Application Supporting System)

Namely, a foreign application supporting system of the present invention is characterized in that it is provided with: application information disclosing means for disclosing, after completing a first country application, an outline of the first country application at least upon receiving the provision of information regarding the first country application; and supporter recruiting means for recruiting a supporter who judges, based on the content disclosed by the application information disclosing means, to wish to support a second country application.

Upon receiving the provision of the information (first country application information) regarding the first country application from a first country applicant, an inventor, an informant company and the like, information which includes the outline of the first country application at least, the outline and so forth are disclosed by the application information disclosing means. A supporter who judges to wish to support a second country application in a certain form by browsing the disclosed information is recruited by the supporter recruiting means.

Then, in a case where a supporter applies for the supporter recruiting means, by carrying out a second country application while receiving support (assistance) from the supporter, the loads in the course of the action are reduced. The supporting subject matters can be not only assisting the charges but also the translation assistance, for example, and can be the assistance regarding the procedures and the like as well.

Note that a person who will be the applicant of the second country application is not limited to the first country applicant, can be its supporter as well, and can be a person who administers this foreign application supporting system (for instance, an administrator company) and the like as well. Moreover, the second country application implies a foreign application which corresponds to the first country applicant, and does not necessarily designate an application which accompanies the priority right set forth in the Paris Convention and so forth.

Anyway, the loads accompanying the second country application (foreign application) can be dispersed and reduced. Accordingly, the opportunity of developing from the first country application to the second country application is expanded, the protection of the invention and the like is intended internationally, and moreover the use of the invention and so forth becomes active internationally.

By the way, it is proper that the foreign application supporting system of the present invention can be further provided with first country applicant recruiting means for recruiting a first country applicant who wishes a second country application on the content regarding the first country application after completing said first country application.

When a person who is the first country applicant and wishes a foreign application is recruited by the first country applicant recruiting means, it is possible to directly receive the provision of the information regarding the first country application (for example, the outline of the first country application) from the first country applicant who applies for the first country applicant recruiting means. In other words, it is possible to efficiently collect the first country application information. Moreover, since the information is collected directly from the first country applicant, it is possible to obtain accurate and fulfilling information as well. Thus, by way of the first country applicant recruiting means, it is possible to more broadly, efficiently and quickly carry out the collection of the first country application information.

Then, when the support is received from the above-described supporter so that the second application is done, it is measured up to the benefit and hope of the first country applicant. Of course, it should be noted that the hope of the first country applicant is not limited to becoming the second country applicant.

### (Foreign Application Supporting Method)

The present invention is one which includes a variety of forms regarding foreign application supporting. So far, the present invention is expressed as the "foreign application supporting system," but this can be expressed as a foreign application supporting apparatus, a foreign application supporting method and the like.

For instance, the present invention can be made into a foreign application supporting method which is characterized in that it is provided with: an application information disclosing step for disclosing, after completing a first country application, an outline of the first country application at least upon receiving the provision of information regarding the first country application; and a supporter recruiting step for recruiting a supporter who judges, based on the content disclosed by the application information disclosing step, to wish to support a second country application.

### (Foreign Application Supporting Program)

Moreover, the present invention can be enforced by letting a computer in which a specific program is read execute the program.

Hence, the present invention can be made into a foreign application supporting program which is characterized in that it lets a computer function as: application information disclosing means for disclosing, after completing a first country application, an outline of the first country application at least upon receiving the provision of information regarding the first country application; and supporter recruiting means for recruiting a supporter who judges, based on the content disclosed by the application information disclosing means, to wish to support a second country application.

Likewise, the present invention can be made into a foreign application supporting program as well which is characterized in that it lets a computer execute an application information disclosing step for disclosing, after completing a first country application, an outline of the first country application at least upon receiving the provision of information regarding the first country application; and a supporter recruiting step for recruiting a supporter who judges, based on the content disclosed by the application information disclosing step, to wish to support a second country application.

### (Computer Readable Recording Medium Recording Foreign Application Supporting Program)

In addition to a case where the program is stored in the fixed storage device of a computer, it can be stored in a computer readable recording medium as well.

Hence, the present invention can be made into a computer readable recording medium as well in which a foreign application supporting program is recorded, foreign application supporting program which is characterized in that it lets a computer function as: application information disclosing means for disclosing, after completing a first country application, an outline of the first country application at least upon receiving the provision of information regarding the first country application; and supporter recruiting means for recruiting a supporter who judges, based on the content disclosed by the application information disclosing means, to wish to support a second country application.

Likewise, the present invention can be made into a computer readable recording medium as well in which a foreign application supporting program is recorded, foreign application supporting program which is characterized in that it lets a computer execute: an application information disclosing step for disclosing, after completing a first country application, an outline of the first country application at least upon receiving the provision of information regarding the first country application; and a supporter recruiting step for recruiting a supporter who judges, based on the content disclosed by the application information disclosing step, to wish to support a second country application.

Note that, as for this recording medium, there are, for example, floppy disks, CD-ROM, CD-R, CD-RW, DVD-ROM, DVD-RAM, a various kinds of flash memories (smart media, compact flashes, PC cards, memory cards and the like).

### (Computer for Supporting Foreign Application)

Moreover, the present invention can be considered a computer per se which can execute such programs as well.

In other words, the present invention can be made into a computer for supporting a foreign application, computer which is characterized in that it functions as: application information disclosing means for disclosing, after completing a first country application, an outline of the first country application at least upon receiving the provision of information regarding the first country application; and supporter recruiting means for recruiting a supporter who judges, based on the content disclosed by the application information disclosing means, to wish to support a second country application.

Likewise, the present invention can be made into a computer for supporting a foreign application, computer which is characterized in that it executes: an application information disclosing step for disclosing, after completing a first country application, an outline of the first country application at least upon receiving the provision of information regarding the first country application; and a supporter recruiting step for recruiting a supporter who judges, based on the content disclosed by the application information disclosing step, to wish to support a second country application.

In the computers for supporting a foreign application, in addition to independent computers, server computers (host computers) or client computers (terminal computers) which are connected communicably with a network are included. Moreover, in the terminal computers, in addition to computers of the respective persons, a variety of things such as information terminal appliances (cell phones, hand-held devices, electronic diaries and the like) are included.

Note that, in accordance with the present invention, the concentration and dispersion of information can be intended very effectively by utilizing networks such as the Internet and the like, it should be noted that, not being limited to the case, it is enforceable with a computer independently.

### Brief Description of Drawings

Fig. 1 is a block diagram for conceptually illustrating the entirety of a first example according to a foreign application supporting system of the present invention.

Fig. 2 is a diagram for illustrating a home page of the first example.

Fig. 3 is a diagram for illustrating a first country applicant recruiting page of the first example.

Fig. 4 is a diagram for illustrating a search page in the application information disclosing page of the first example.

Fig. 5 is a diagram for illustrating an application page in the application information page of the first example.

Fig. 6 is a diagram for illustrating a supporter recruiting page of the first example.

Fig. 7 is a block diagram for conceptually illustrating the entirety of a second example according to a foreign application supporting system of the present invention.

Fig. 8 is a diagram for illustrating a right information disclosing page of the second example.

Fig. 9 is a diagram for illustrating a right holder recruiting page of the second example.

### Best Mode for Enforcing Invention

### A. Mode of Enforcement

Next, while naming enforcement modes, the present invention will be described in detail. Note that, although it is described hereinafter while taking a foreign application supporting system as an example mainly, it should be noted that the respective description contents are applicable properly with respect to foreign application supporting methods, foreign application supporting programs, computer readable recording media recording foreign application supporting programs, computers for supporting foreign applications and computer readable-and-writable storing medium and the like by varying their phrases and so forth.

### (1) First Country Applicant Recruiting Means (Applicable to First Country Applicant Recruiting Step Similarly)

First country applicant recruiting means is one which recruits a first country applicant who completed a first country application and wishes a second country application on the content of the first country application.

The first country applicant recruiting means, for example, comprises first country applicant recruiting information storing means (storing device) which stores first country applicant recruiting information. Moreover, it is good to be provided with displaying means for displaying the first country applicant information which is retrieved from the first country applicant information storing means.

In a case where electric communication means such as the Internet (line) and online (line) are used in the present system, it is preferred that a server computer, making the hub of the present system, can be provided with the first country applicant information recruiting means and a terminal computer can be provided with the displaying means. In this case, the first country recruiting means is constituted by the server computer and the terminal computer which is connectable with the server computer through the electric communication means.

Note that it is needles to say that the respective computers are properly provided with the basic constitutions as a computer, namely, a control device (central processing device such as CPU), a storing device (memory such as ROM and RAM) and a communication device (interface such as LAN cards).

The first country applicant information is, for example, an advertisement for recruiting a first country applicant and data such as a first country applicant recruiting page and the like which are displayed when accessing sites of the Internet.

The first country applicant recruiting page and the like can be uni-directional, but can preferably have bi-directionality. For example, when the first country applicant can browse the first country applicant recruiting page and when inputting data and transmitting data can be done from input means, it is possible to quickly exchange information.

More specifically, when the server computer is accessed from the terminal computers of respective corporations and individuals, data regarding the recruiting page and the like are retrieved (transmitted) from the server computer, and the recruiting page and so forth are displayed on a monitor (displaying means) and so on of a displaying device of the terminal computers.

In a case where the first country applicant who views the recruiting page and the like tries to apply for it, it is preferred that he or she can input predetermined particulars in blanks and so forth which are disposed in the recruiting page and so on in advance. At this moment, it is preferred that the first country application information can be input, first country application information which comprises, at least, an outline and the like, which make the content regarding the first country application understandable, and bibliographic particulars which can identify the first country applicant. Note that, in this instance, it is needless to say that the terminal computers are required to be provided with input means such as a keyboard, a mouse, a dial input button and so forth.

The outline and the like regarding the first country application can be, for example, one in which the content of an abstract (document) and so forth which are submitted in the first country application are input (filled in) as they are in the original language. Of course, those contents can be recited dually in English and so on or the language of a second country which the first country applicant wishes. Moreover, in the bibliographic particulars, for instance, in addition to the full name, (electronic) mail address and the like of the first country applicant, it is good to fill in the filing date and so forth of the first country application.

Note that the first country application herein implies an application which is done in the first place, the first country cannot necessarily be required to be an application in the home country or the country of origin. Further, it can even be a non "first application" which takes the priority right and the like of the Paris Convention into consideration. Furthermore, the first country applicant as well is not limited, for example, to nationals of a country where the server computer is disposed, and nationals, corporations and so forth of respective countries worldwide are targeted. Moreover, the content of the first country application is not limited to patent applications, and can be utility model (registration) applications, design (registration) application, trademark (registration) applications and so on. In addition, it can be registration applications (petitions) and the like of copyrights and so forth.

### (2) Application Information Disclosing Means (Applicable to Application Information Disclosing Step Similarly)

The application information disclosing means is one which discloses at least an outline of the content regarding the first country application.

This application information disclosing means comprises, for example, first country application storing means which stores first country application information. Moreover, this first country application information storing means, for instance, comprises a storing device storing data which the first country applicant who has applied for the above-described first country applicant recruiting means has input. Then, it is good to be provided with displaying means displaying the first country application information which is retrieved from the first country application information storing means.

In a case where the present system is constituted on the above-described network, it is preferred that the first country application information storing means can be provided in the server computer and the displaying means is provided in the terminal computers. In this case, the information disclosing means can be constituted with the server computer and the terminal computers which are accessible to the server computer by the Internet and the like.

In this instance, when an operator of the terminal computers accesses the server computer, the outline and the like regarding the first country application and the bibliographic particulars and so forth are retrieved (transmitted) from the server computer, those contents are displayed on the monitor (displaying means) and so on of the terminal computers which are present in corporations or homes, and it becomes possible to browse them.

By the way, as described above, it is proper that the application information disclosing means can be one which discloses based on the information being input by the first country applicant who has applied for the first country recruiting means. Being based on the data being input by the first country applicant who has applied for, it results in the reduction and the like of the operation man-hour requirements, thereby intending the reduction of the operating costs of the foreign application supporting system.

Anyway, it is not necessarily required to display such outline and the like regarding the first country application and bibliographic particulars as being input by the first country applicant, and it is good to add certain variations (processing) on the language, form and so forth and display.

It is proper that the application information disclosing means can be one which mentions at least the outline of the first country application in English or recites it therein dually.

By using English being an international language, it is more readily for people who use languages different from that of the first country applicant to understand the content of the first country application, and it is possible to more internationally recruit supporters and the like.

By mentioning not only the application information disclosing means but also at least a part of the contents which are displayed by the above-described first country applicant recruiting means, later-described supporter recruiting means, right information disclosing means and right holder recruiting means in English or reciting them therein dually, the international concentration and dispersion of the information are intended, and it is convenient. In that case, it is good that each of the information of the first country application and the like can be stored as English information in the respective storing means such as the first country application information storing means and so on.

It is proper when the application information disclosing means can be one which accompanies an assessment on said first country application. By accompanying the assessment regarding the first country application, it is easy for supporters to judge whether they support a second country application or not. Moreover, it helps the judgement of latter-described one who wishes to obtain a right.

This judgement can preferably be carried out objectively by a third party excepting the first country applicant, it is good to be carried out, for example, by the administrator company of the server computer, the engineers of the respective technical fields (for example, professional consultant engineers and the like), patent attorneys and so forth.

In particular, in a case where the first country application is a patent application, it is proper to accompany such an assessment. Since it is often the case that the value and the like of invention are hard to understand at first sight, the significance of the existence of the assessment is high.

Note that the content of the assessment can be, in addition to the technical values, the technical explanations, the introduction of the applicable fields, the future prospects and economic values and the like of invention, design, trademark and so forth. Anyway, it is good that a various pieces of assessment information can be stored in the first country application information storing means or the assessment information storing means in such a manner that they are included in the first country application information or they are related to the first country application information.

Moreover, it is preferred that the application information disclosing means can carry out searching by the types, technical field, article fields, goods fields of the first country application or keywords and the like. Thus, even when the first country application information is accumulated in the server computer in abundance, readers (for example, supporters and so forth) can quickly access the first country application in which they are interested. Of course, it is required that information which corresponds to the searching information be included in the first country application information. Hence, it is good that each information of application type information and so on can be stored in the first country application information storing means. Then, the computer for supporting a foreign application can preferably have first country application information extracting means which makes comparison between the first country application information and at least a part of the desired searching information to extract the first country application information, which corresponds to the searching information, from the first country application information storing means. Note that the searching information is input from the input means of the terminal computers by the readers.

Moreover, it is proper that the application information disclosing can be provided with reader limiting means which enables only members which have been registered in advance to browse the content of the first country application.

Thus, it is possible to inhibit maliciously acting persons and the like from intruding. Moreover, by laying duty and so forth to keep secret on the members, at least until the first country application is laid open, the novelty and so on of the content of the first country application (patent application, design application and the like) are guaranteed.

The reader limiting means requests readers to input an ID number or password, which has been registered in advance, from the input means of the terminal computers and the like in order to confirm whether the readers are the members themselves. Only when the input information is correct, it is one which allows browsing the outline and so forth of the first country application by the application information disclosing means (reader limiting step).

This reader limiting means can be constituted, for example, by member information storing means which stores member information such as the ID number, password and the like of the members, and member information checking means which checks the input information such as the ID number, password and so forth which are input from the input means with the member information which is stored in the member information storing means. When the present system is constituted on a network, it is good to provide the server computer with the member information storing means and the member information checking means.

### (3) Supporter Recruiting Means (Applicable to Supporter Recruiting Step Similarly)

The supporter recruiting means is one which recruits a supporter who judges, based on the content disclosed by the application information disclosing means, and wishes to support a second country application.

The supporter recruiting means comprises, for example, supporter recruiting information storing means (storing device) which stores the supporter recruiting information. Moreover, it is good to be provided with displaying means for displaying the supporter recruiting information which is retrieved from the supporter recruiting information storing means.

In a case where the present system is constituted on the above-described network, it is preferred that the server computer can be provided with the supporter recruiting information storing means and the terminal computers can be provided with the displaying means. In that case, the supporter recruiting means can be constituted with the server computer and the terminal computers which are accessible to the server computer through the Internet and the like.

Thus, when the server computer is accessed from the terminal computers of respective corporations and individuals, the data regarding the recruiting page and the like are retrieved (transmitted) from the server computer, the recruiting page and so forth are displayed on the monitor (displaying device) and so on of the terminal computers.

In a case where an operator of the terminal computers takes a technical interest, a business interest, an investment interest and the like in the content of the first country application which is browsed by the above-described application information disclosing means, he or she may find out the value of a second country application regarding the content. In this instance, when a supporter applies for it, it is possible to express an intention to be a supporter.

It is possible to carry out this intention expression, for example, by inputting support information, which comprises bibliographic particulars, supporting subject matters and the like, from the input means, in the predetermined blanks and so forth, which are displayed on the monitor and so on of the terminal computer of the supporter, and by transmitting it back to the server computer. Then, the server computer can preferably be provided with support information storing means which stores the support information, which is input by the supporter, by relating it to the first country application information.

Further, it is preferred that the server computer can notify the support information which is stored in the support information storing means, and the appearance of a person who wishes to support the first country applicant or the administrator of the present system with an electric mail and the like. In a case where there are a plurality of supporters who have applied for the supporter recruiting means, it is good to arrange so that the first country applicant and so forth can appropriately select one who has presented favorable conditions among them.

Furthermore, it is proper that this supporter recruiting means can be provided with warning means which issues a warning against the priority period regarding said first country application.

For example, in a case where the priority right set forth in the Paris Convention is used, by carrying out a second country application within the priority period, it is possible for the second country application to obtain benefits, which are similarly to those when the first country application is made, at least. By issuing the warning to call the supporter's attention at least, it is easy for the supporter to carry out a precise judgment on the second country application.

The priority period is not limited to the one based on Article 4 of the Paris Convention, and can be a priority period which a second country lays down independently. It is further preferred that the information regarding the priority right and priority period of every country can be simultaneously displayed by the application information disclosing means. Therefore, it is good to provide the application information disclosing means with the warning means.

Such warning means can be constituted, for example, by means for calculating the number of days based on the first country application information (filing date or priority date). The warning content can be displaying the terminal date of the priority period or displaying the remaining number of days up to the terminal date.

However, there can be a case where the novelty is not lost or a specific provision exists depending on the legal system of the respective countries. Therefore, it is not necessarily meaningless if the second country application is not carried out within the priority period. Hence, even after the priority period passes, the supporter can carry out supporting the second country application.

Note that not to mention a case where the supporter is in the same country as that of the first country applicant, the supporter can be one who has a domicile or residence in the other countries. In particular, when the nationality, address and the like of the supporter are the second country which the first country applicant desires, it is possible to smoothly carry out the translation, procedures and so forth. While, when viewed from the supporter, since the second country application set forth in the present invention makes an ordinary domestic application, it is possible to do with less required fee loads and so on in that instance.

Moreover, the supporter can be, upon receiving the transfer and the like of the priority right or filing right for himself or herself, a second country applicant. Thus, there can be a case where it is easy for the supporter to intend the business development and so forth in its own country and so on.

### (4) Right Information Disclosing Means (Applicable to Right Information Disclosing Step Similarly)

It is proper that the foreign application supporting system can be provided with right information disclosing means which discloses right information regarding the first country application and/or the second country application.

The right information disclosing means comprises, for example, right information storing means which stores right information (data) regarding the first country application and/or the second country application. Moreover, it is preferable to be provided with displaying means which displays the right information.

In addition, the right information disclosing means can be constituted, for example, with a server computer which is provided with the right information storing means (storing device) and a terminal computer which is accessible to the server computer by the Internet and the like and which is provided with displaying means.

Thus, when the server computer is accessed from the terminal computer, the right information regarding the first country application and/or the second country application is displayed on the monitor and the like of the terminal computer, and thereby it is possible to browse the right information. Then, it is possible to readily carry out the value judgement regarding the first country application or the second country application.

For example, by knowing the right information regarding the first country application, it is easy for the supporter to judge the value of the second,country application. Moreover, when the right information of the second country application is obtained after the second country application, by licensing and the like, it is possible to expand the use of the second country application.

This right information disclosing means discloses, for example, examination processes, whether there is any registration or not, reference known literatures and the like. It is good to include right information in the above-described first country application information, or to relate it thereto so as to constitute the right information disclosing means as a part of the application information disclosing means.

### (5) Right Holder Recruiting Means (Applicable to Right Holder Recruiting Step Similarly)

It is proper that the foreign application supporting system can be further provided with right holder recruiting means which recruits a person (potential right-holding candidate) who wishes, based on the content disclosed by the application information disclosing means and/or the right information disclosing means, to obtain a right regarding the first country application and/or the second country application.

The right holder recruiting means comprises, for example, right holder recruiting information storing means which stores right holder recruiting information (data) of a recruiting page and the like which recruit a potential right-holding candidate. Moreover, it is preferable to be provided with displaying means which can display the right holder recruiting information.

In addition, the right holder recruiting means can be constituted, for example, with a server computer which is provided with the right holder recruiting information storing means (storing device) and a terminal computer which is accessible to the server computer by the Internet and the like and which is provided with displaying means. In this case, when the server computer is accessed from the terminal computers of respective corporations and individuals, data regarding the recruiting page and the like are retrieved (transmitted), and the recruiting page and so forth are displayed on the monitor and so on of the terminal computers.

A person who has browsed the application information and the right information of the first country application or the second country application, which are disclosed by the application information disclosing means or the right information disclosing means, to appreciate value in those can obtain holding opportunities of rights regarding those by applying for the right holder recruiting means. Thus, the use of the patent and the like is more widely intended.

At this moment, the server computer can preferably be provided with potential right-holding desire information storing means which relates right-holding desire information, which is input by the potential right-holding candidate from the input means of the terminal computer, to the first country application information to store.

For rights which are desired to hold, various rights can be thought of, however, as for the rights regarding the first country application and/or the second country application, there are, for example, the priority right, the filing right, the enforcement right and the exclusive right.

When it is the priority right, it is possible to advantageously carry out the second country application, when it is the filing right, it is possible to make the second country application into one's own application. Moreover, after the first country application or the second country application is turned into a right (after registration), by obtaining the enforcement right, it is enforceable or usable (in case of trademarks), in addition, by obtaining the exclusive right, the exclusive enforcement (use) is possible.

### (6) Computer for Supporting Foreign Application

The computer for supporting a foreign application can comprise, as described above, an independent computer or a server computer which builds a network and its terminal computers and the like.

For example, in a case where the computer for supporting a foreign application is a server computer, it is proper to make it into a server computer which has a storing device which stores information (data) regarding the first country applicant recruiting means, the application information disclosing means and the supporter recruiting means, and an electric communication device which can communicate with the outside.

This server computer (host computer) is managed, for example, by the administrator company and the like of the foreign application supporting system. The first country applicant, the supporter and the like can access the site which is controlled by the administrator company and so forth from the terminal computer by way of electric communication means.

When the foreign application supporting system is controlled or administered by using such a server computer, it is efficient because the man-hour requirements for controlling the foreign application system are reduced remarkably. Moreover, since the server computer can communicate with the outside, it is possible to acquire or collect many pieces of information not only within the country but also all over the world, for example, by using the Internet and the like, and those are accumulated in the various storage devices of the server computer. Then, by the application information disclosing means, many pieces of information regarding the first country application are disclosed or provided worldwide. Moreover, by the supporter recruiting means, it is possible to recruit a supporter for the second country application all over the world, and thereby the opportunity for the second country application and the number of the filing countries are furthermore enhanced. Thus, it is possible to provide much richer services by the foreign application supporting system of the present invention. Besides, by the Internet and so forth, it is possible to carry out the correspondences between the first country applicant recruiting means, the application information disclosing means and the supporter recruiting means timely, quickly, smoothly and at reduced costs.

Here, the first country applicant recruiting means, the application information disclosing means and the supporter recruiting means are taken as examples, and have been described, however, they are similarly applicable to the right information disclosing means and the right holder recruiting means as well.

Note that the electric communication means which connects the server computer with the terminal computers can be, in addition to the Internet or online and the like, one in which a network can be formed by LAN, WAN and so forth. Moreover, the electric communication means is not limited to wired circuits such as telephone circuits and cable (television) circuits, and can be one which is connected with wireless circuits.

### (7) Storing Medium

It is also possible to constitute the foreign application supporting system by using a readable-and-writable storing medium which is characterized in that it is provided with: an output file in which first country application information regarding a first country application is stored, the first country application information being displayable on a displaying device of a terminal computer; and an input file in which support information is stored, support information which a supporter inputs from an input device of the terminal computer, supporter who has retrieved the first country application information from the output file, has let it display on the displaying device to browse and has come to wish to support a second country application regarding the first country application.

In this case, the first country application information (data) regarding the first country application is stored in the output file, first country application information which has been collected in advance. At the terminal computer, the information is retrieved and displayed on the displaying device (displaying means). Thus, it is possible to browse the content regarding the first country application. The readers view the content to judge whether they support the second country application, in a case where they wish to support, they input support information such as information (data) and the like regarding the supporters from the input device (input means) of the terminal computer, and they store it in the input file of the storing medium.

When the storing means is used, since nothing is constrained by the electric communication means, it is possible to expand the usable range of the foreign application supporting system.

Note that, as for the storing medium set forth herein, there are, for example, floppy disks, CD-R, CD-RW, DVD-RAM, a various kinds of flash memories (smart media, compact flashes, PC cards, memory cards and the like).

### B. Examples

Next, while naming examples, the present invention will be described more specifically.

### (1) First Example

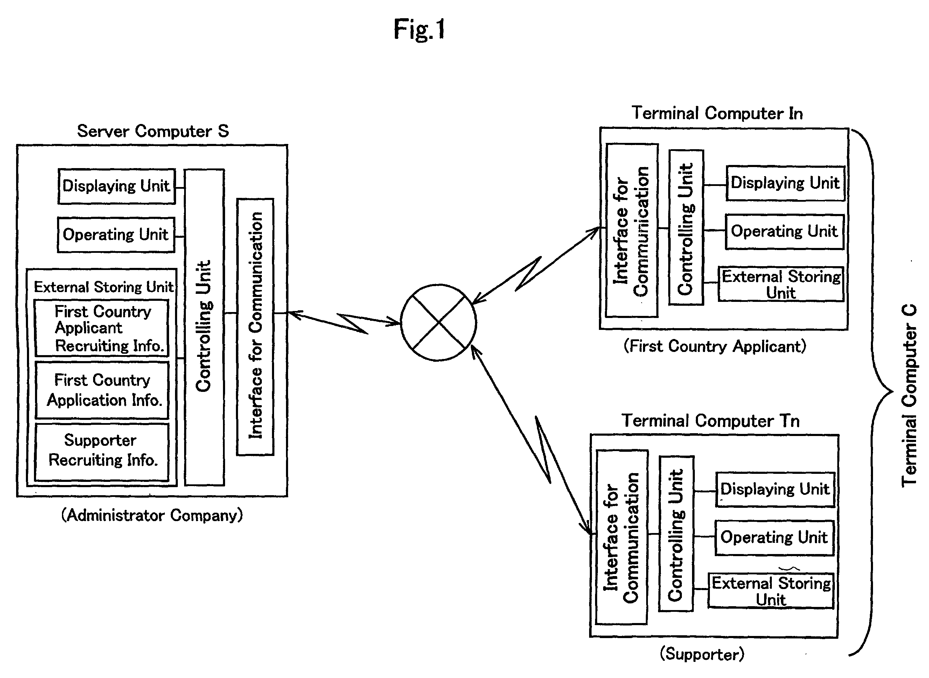

A first example of a foreign application supporting system is illustrated in Fig. 1. This foreign application supporting system comprises a server computer S which its administrator company controls, a large number of terminal computers C and a network which connects them by the Internet. Here, the terminal computers C are classified, for convenience, into terminal computers In (n = 1, 2, 3 ···) which a plurality of first country applicants control and terminal computers Tn (n = 1, 2, 3 ···) which a plurality of people who wish to support control. However, depending on purposes of accessing the server computer S, the identical terminal computers C can be the terminal computers In, Tn, respectively.

These server computer S and respective terminal computers C are provided with the basic structure as a computer. They are, externally, provided with a displaying unit (displaying device: displaying means) comprising a display, and an operating unit (input device: input means) comprising a keyboard and a mouse, and, internally, provided with an external storing unit (storing device: storing means) such as a hard disk and the like storing a variety of data, and a controlling unit and so forth comprising CPU, RAM, ROM and so on. Then, moreover, by way of an interface (electronic communication device) for communicating, the terminal computers C and the server computer S are connected communicably on the network.

Then, the server computer S and the terminal computers C can communicate bi-directionally, for example, when an access is made from one of the terminal computers C to the server computer S, page data which correspond to the aim of its operator are transmitted from the server computer S to the terminal computer C, and the page is displayed on the display of the terminal computer C. On the contrary, when predetermined information is input and the like in the page which is browsed by the operator on the side of the terminal computers C and the input data and so forth are transmitted to the side of the server computer S, the server computer S relates the input data to the page data and so on to store in the external storing unit.

Then, in the external storing unit of the server computer S, the following page data (a variety of information) are stored.

### ① Home Page

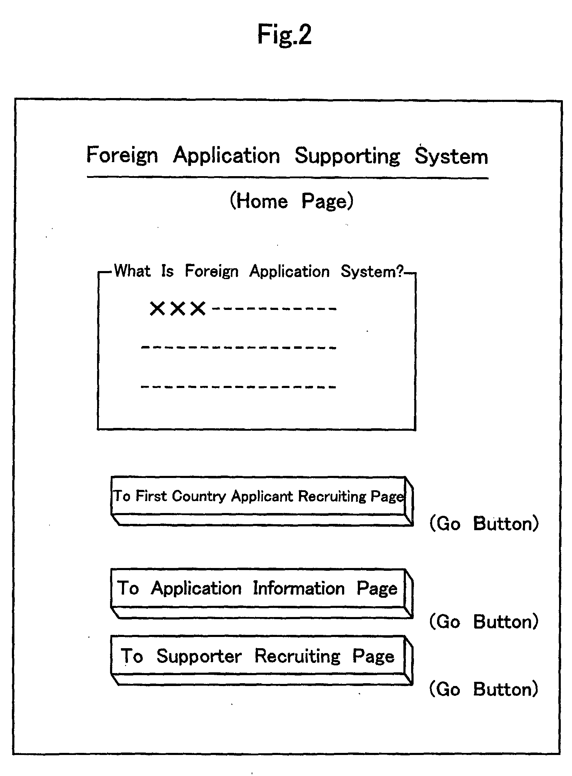

A home page is, as illustrated in Fig. 2, a page which carries out an introduction on the foreign application supporting system, and simultaneously in which respective selectable buttons are displayed so as to enable the operator who has accessed from the terminal computer C to go to aiming pages.

When the operator clicks either one of the buttons, it is possible to go to an aiming page. Note that "clicking a button" and the like imply that commands are transmitted from the terminal computers C to the server computers S, and that "going to a page" and so forth imply that the data of the relevant page are transmitted from the server computer S to the terminal computers C and the page is displayed on the displaying unit of the terminal computers C. Hereinafter, they imply likewise.

### ② First Country Applicant Recruiting Page

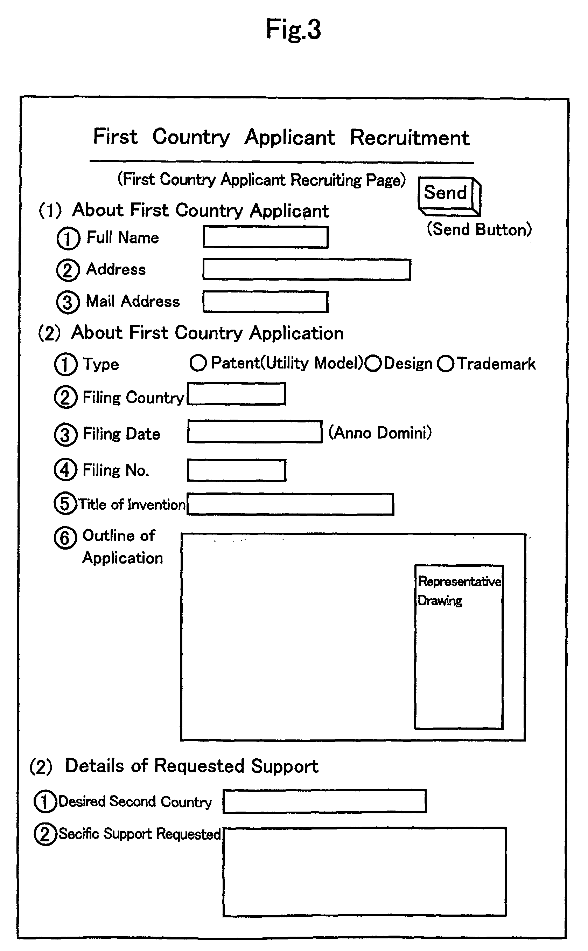

A first country applicant recruiting page is, as illustrated in Fig. 3, a page in which a first country applicant who wishes a second country application inputs required particulars in blanks to express his or her intention.

When a send button is clicked after the required particulars are input, the input data are transmitted from the terminal computer C to the server computer S, the server computer S stores the input data as first country application information.

For the input items of this page, there are bibliographic particulars regarding the first country application, countries to which a second country application is desired, details of requested support, the outline of the first country application and the like. Note that, in Fig. 3, the input is requested in the language of the first country application, however, to input in English can be requested, moreover, to dually recite them can be requested. Moreover, only on a part of the outline and so forth of the first country application, to input in English can be requested.

The input items as the bibliographic particulars are, for example, the full name, address and mail address of the first country applicant, the type (patent and the like), the filing country, the filing date, the filing number, the title of the invention and so forth of the first country application. However, the countries to which a second country application is desired are simply no more than temporary ones. When there is no supporter who meets the wish, the second country application to the desired country becomes difficult. However, in a case where the supporter wishes to do a second country application to the other countries, by the adjustment between the two parties, it is probable that a second country application would be done other than the desired countries.

The details of requested support are, in addition to supporting the charges, supporting the translation, supporting the procedures and the like, succession and so forth of the filing right (for example, the right to obtain a patent).

The outline of the first country application is, for example, an abstract of an invention if it is a patent application, an article to which a design is applied, its representative drawing or reference drawing such as a perspective drawing and a photograph if it is a design application, designated goods, designated serivice (services) and its sample trademark if it is a trademark application. Note that, in this foreign country application supporting system, in case of a patent application, it is not arranged, in order to relieve the loads of the operator (first country applicant) and to improve the browseability, to have the entirety (specification and the like) inserted therein.

In this example, this first country applicant recruiting page corresponds to the first country applicant recruiting means, and its data correspond to the first country applicant information. More specifically, the first country applicant recruiting means is constituted by the server computer S which is provided with the page data, the terminal computers In which display the page, and the network which makes the two communicable.

### ③ Application Information Disclosing Page

The application information disclosing page comprises a searching page, and an application page which displays the contents regarding the first country applications which are relevant to searched results one after another.

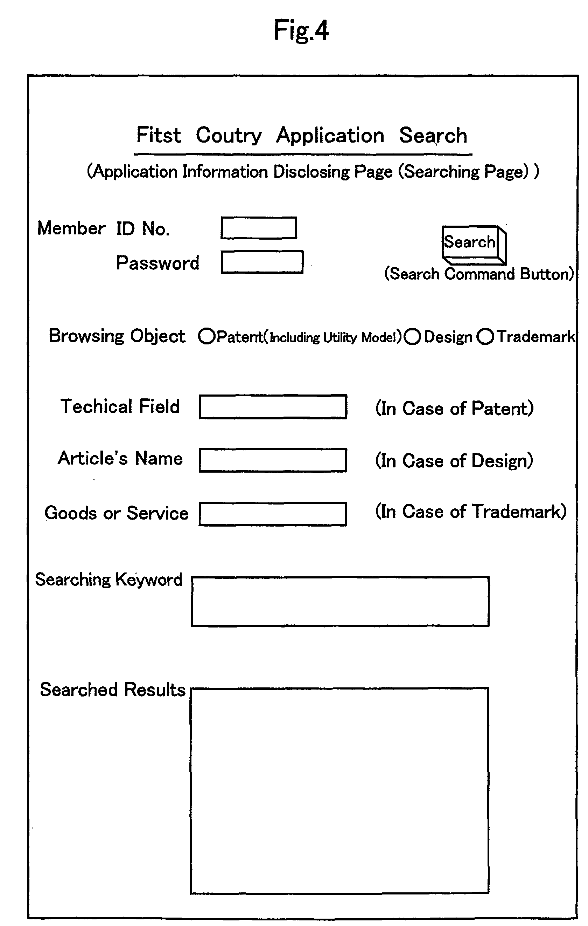

The searching pages comprises, as illustrated in Fig. 4, input blanks for an ID number and a password, selectable buttons for browsing objects, input blanks for inputting technical fields or searching keywords (searching information), a search command button, and a portion for displaying a list of searched results.

It is necessary for the operator (reader) to correctly input the ID number and password which have been registered with the administrator company in advance. Unless being a registered member, it is not possible to carry out the following searching and browsing (reader limiting means).

In a case where the operator is a legitimate member, when he or she clicks the search command button after selecting a browsing object, inputting a searching word and the like, the searching information data and the search command are transmitted from the terminal computer C to the server computer S, the server computer S searches and extracts relevant ones from the first country application information data which are stored in the external storing unit, and sends back the results to the terminal computer C.

When the terminal computer C receives the searched result data, the list is displayed in the searched result blank along with the title of the invention and the like. When the operator clicks a first country application, which he or she wishes to browse by sequential or discretional extraction, to switch to display its application page, it enables him or her to browse the content.

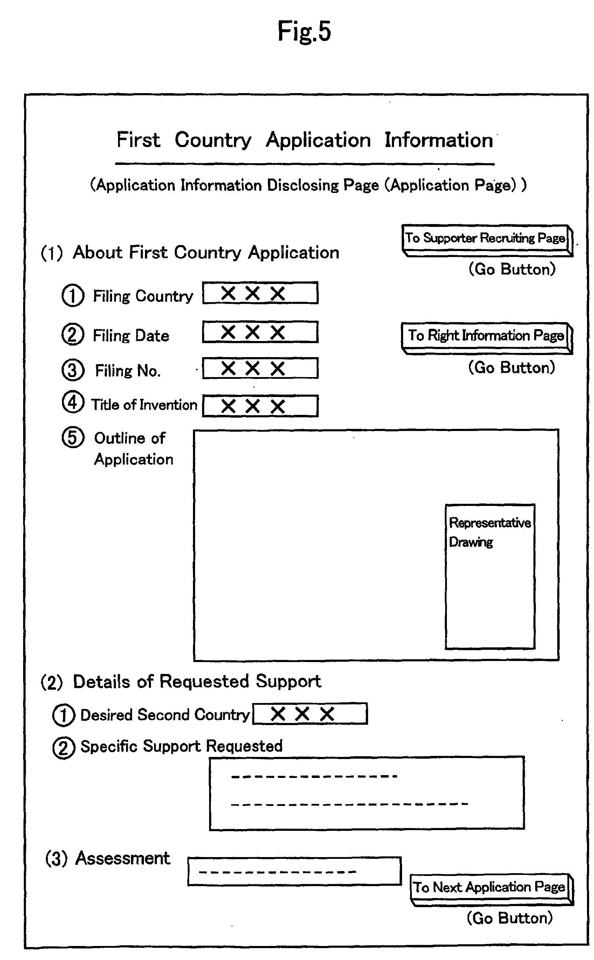

The application page is, as illustrated in Fig. 5, a page in which the selected first country application information is displayed. Specifically, there are displayed the bibliographic particulars (the filing country of the first country application, the filing date, the filing number, the title of the invention and the like), the desired countries for second country applications, the details of requested support (charges, translation and so forth) and the outline (the abstract of the invention, the representative drawing and so on) of the first country application which the first country applicant has input in the first country application recruiting page. However, in this page, the contact end of the first country applicant such as the full name, the address and the mail address and the like are not displayed.

In a case where the first country applicant carries out the input in English dually in the first country applicant recruiting page, it is arranged to recite it dually in English. Moreover, in a case where the first country application is a patent application, a concise technical assessment which has been carried out by a contracted engineer of the above-described administrator company on the content is displayed.

Moreover, in a case where there are a plurality of the searched results in the above-described searching page, when a button for the next application page is clicked, information regarding the next first country applicant is displayed.

Note that, when the go button, disposed in the respective application pages, to the supporter recruiting page is selected, the monitor is switched to a later-described supporter recruiting page.

In this example, this application information disclosing page corresponds to the application information disclosing means. More specifically, the application information disclosing means is constituted by the server computer S which is provided with the page data, the terminal computers Tn which display the page, and the network which makes the two communicable.

### ④ Supporter Recruiting Page

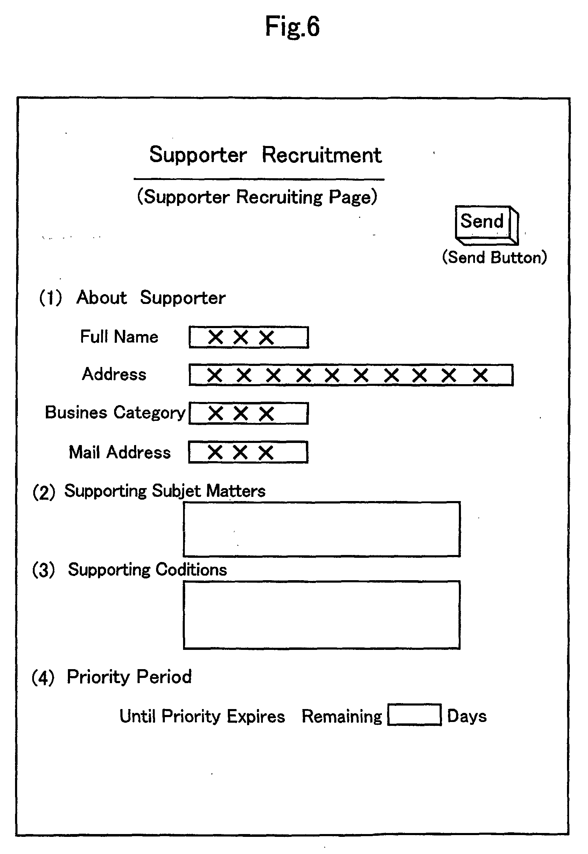

The supporter recruiting page is, as illustrated in Fig. 6, is a page in which, in a case where an operator (supporter) of the terminal computer Tn views the above-described application page to judge that it is worth a second application, he or she inputs required particulars in blanks to express his or her wish to support a second country application.

When a send button is clicked after the required particulars are input, the input data are transmitted from the terminal computer Tn to the server computer S, and the server computer S relates the input data to the relevant first country application information and stores them as support information in the external storing unit.

The input items to be required in this page are bibliographic particulars regarding a supporter (person who wishes), supporting subject matters, supporting conditions and the like. Note that a language used to input is done in the language of the first country application or in English in order to make the correspondence and so forth to the first country applicant easy.

The input items as the bibliographic particulars are, for example, the full name, address, business category, mail address and the like of the supporter. However, since the supporter who browses the application information disclosing page is a member who has been registered in advance, regarding the bibliographic particulars, they are displayed automatically.

The supporting subject matters are, for example, supporting the charges, supporting the translation, supporting the procedures and the like. The supporting conditions are how to share the charges, how to allocate the benefits, how to handle the second country application (for example, the transfer or assignment of rights and the like) and so forth.

Note that, in this supporter recruiting page, the remaining number of dates from the first country filing date within the priority period (Article 4 (C) of the Paris Convention) is displayed to issue a warning to the supporter (warning means).

In this example, this supporter recruiting page corresponds to the supporter recruiting means, and its page data correspond to the supporter recruiting information. More specifically, the supporter recruiting means is constituted by the server computer S which is provided with the page data, the terminal computers Tn which display the page, and the network which makes the two communicable.

⑤ Notification

By the way, the input data of the supporter are arranged so that they are automatically forwarded to the mail address of the corresponding first country applicant from the server computer S. The first country applicant can know that a supporter who wishes to support exists and the supporting subject matters and the like. However, at this stage, the contact end of the supporter is not notified, and only the ID number of the supporter is notified to the first country applicant.

In a case where a proper supporter is found out, the first country applicant sends to that effect and the ID number of the supporter back to the server computer S. When the administrator company of the server computer S receives this reply, it intervenes between the first country applicant and the supporter, and, upon confirming the intentions and conditions of the two by electric mails, notifies, in a case where the two agree, one of the parties the contact end of the other one of the parties.

In this instance, after confirming that the payment (electronic account settlement and the like) of a fee to the administrator is made by at least one of them, the contact ends of both of the parties can be notified. Moreover, depending on the presented conditions of the two, the administrator company itself can carry out the application procedures, and can further be an applicant. In such a case, between the first country applicant, the supporter and the administrator company, it is preferable to make a contract regarding the subsequent allocation of the benefits.

### (2) Second Example

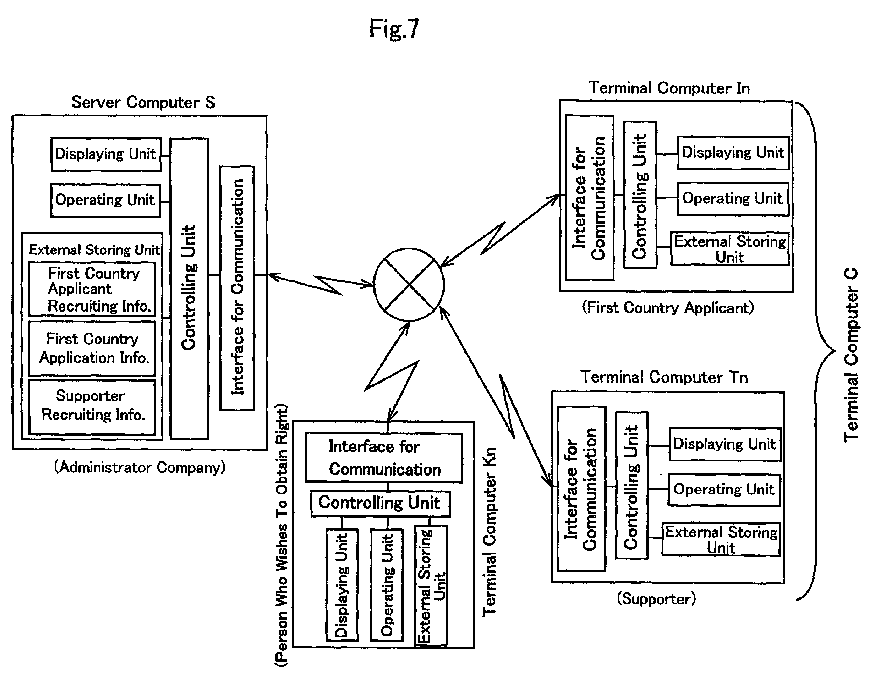

This example is, as illustrated in Fig. 7, one in which right information disclosing means and right holder recruiting means are added to the above-described example.

Specifically, similarly to the above-described example, a right information disclosing page corresponds to the right information disclosing means, and a right holder recruiting page corresponds to the right holder recruiting means. Their page data are stored in the external storing unit of the server computer S, and the transmission and reception are possible between the server computer S and terminal computers Kn by way of the network. Therefore, more specifically, the right information disclosing means and right holder recruiting means are constituted by the server computer S which is provided with the page data, the terminal computers Tn, Kn which display the pages, and the network which makes the two communicable. Note that the terminal computers Kn (n = 1, 2, 3 ···) are the designations of the terminal computers C, which are controlled by a plurality of persons wishing to obtain a right, for convenience.

### ① Right Information Disclosing Page

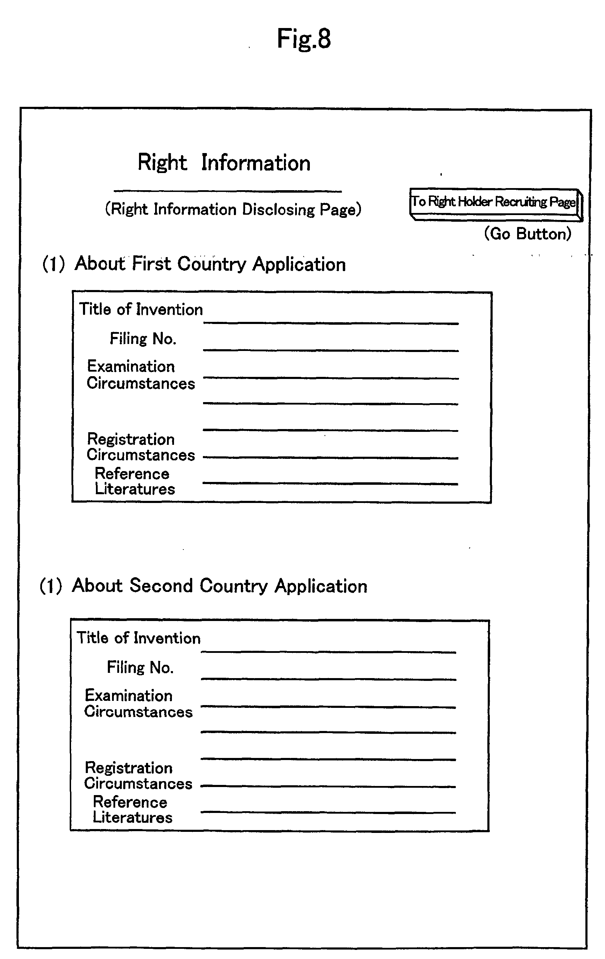

In the right information disclosing page, as illustrated in Fig. 8, right information on the first country application and right information on the second country application corresponding thereto are displayed in a first blank (first country application right information blank) and a second blank (second country application right information blank), respectively. Specifically, there are displayed the examination progresses and registration circumstances in the respective countries' patent office, and reference technical literatures and the like.

To the right information disclosing page, it is possible to move by clicking the button which is disposed in the above-described application information disclosing page (Fig. 5). By knowing those pieces of right information together with the outline and the like displayed in the application information disclosing page, they become useful one as information for making a decision on whether, regarding the first country application or the second country application, a license agreement is concluded or not and so forth. Then, in a case where the reader wishes to obtain a right, upon clicking the go button to the right holder recruiting page, it is switched to a subsequently-described right holder recruiting page.

Note that, in this example, the data which the first country applicant and the second country applicant have input one after another are arranged so that they are displayed in the first blank and second blank of the right information disclosing page, respectively. The input of those data is made compulsory for the first country applicant and the second country applicant because it is beneficial for those parties when a licensee and the like appear by way of the right holder recruiting page. Moreover, this makes it possible to administer this system at lower costs.

### ② Right Holder Recruiting Page

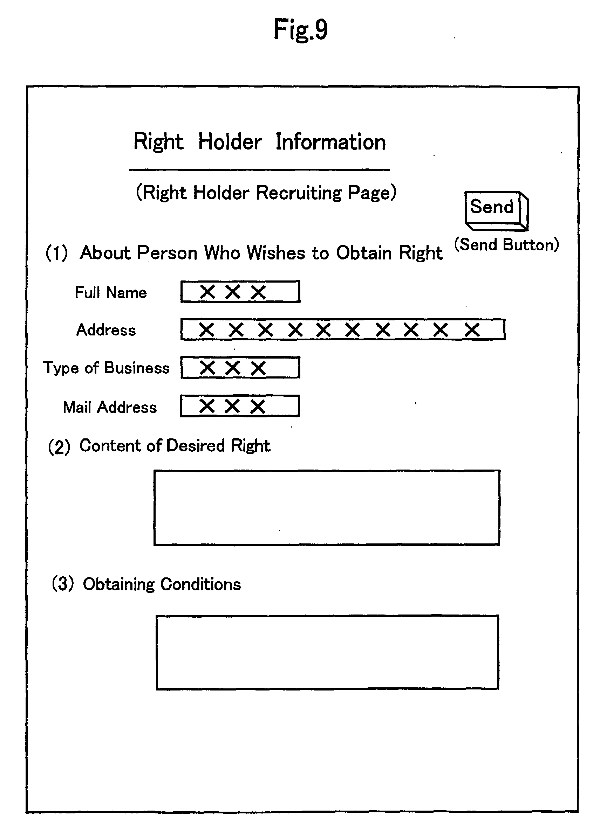

The right holder recruiting page is, as illustrated in Fig. 9, is a page in which, in a case where an operator (reader) of the terminal computer Kn views the above-described application information disclosing page or right information disclosing page to judge that there is a value regarding the first country application and the second country application, he or she can express his or her wish to obtain a right regarding them. The right holder recruiting page data correspond to the right holder recruiting information.

Specifically, when a send button is clicked after the required particulars are input in the blanks disposed in the page, the input data are transmitted from the terminal computer Kn to the server computer S, the server computer S relates the input data to the data (application information) of the relevant first country application (or second country application) and stores the as desired right-obtaining information in the external storing unit.

The input items required in this page are bibliographic particulars regarding a right holder (person who wishes), the content of desired right, obtaining conditions and the like. However, since the reader of the application information disclosing page and/or right information disclosing page is a member who has been registered in advance, regarding the bibliographic particulars, they are displayed automatically. The other specific input items are the same as the case of the above-described supporter recruiting page substantially, and, moreover, the negotiation, correspondence and so forth between the person who wishes to obtain a right and the first country applicant or the second country applicant are similar to the case of the first example.

### (Others)

① In the above-described examples, it has been described on the assumption that the first country application is done in Japan and the supporter is a resident in Japan, however, for example, even when the first country is the United States of America, even when the supporter is an American, or, moreover, even when it is other than that case, it does not matter at all with the foreign application supporting system of the present invention.

If the first country application is done by an electronic application (patent application and the like) in Japan, the first country applicant can provide the content of the first country application, the application information, as electronic data, and accordingly the loads of the first country applicant are relieved.

Moreover, for example, when the first country application is a patent application in the United States of America and the like, and when it is not done by an electronic application, by reading the filed documents with a scanner and so forth, it is possible to provide application information as image data. In addition, it can be one in which information regarding the first country application is provided to the administrator company of the server computer S by FAX and so on and the administrator company discloses the outline and the like by the application information disclosing means.

When the first country application is an application in English-speaking countries, even if it is disclosed by the application information disclosing means without translating and the like the content, it is easy to collect a supporter from all the countries of the world through the supporter recruiting means.

Moreover, such a first country application and a second country application are not limited to an ordinary domestic application, and can be an international application and a regional application. Then, when the second country application is an international application based on the Patent Cooperation Treaty, it can be one which includes a so-called self-designation.

② In the above-described examples, the outline of the first country application is disclosed by the application information disclosing means, however, in a case where the first country application is a patent application and the like, it is good to disclose the scope of patent claim (claims) at least. Thus, it is easy to predict the scope of obtainable right by the second country application. Of course, when the detailed description such as an example and so forth of the invention is disclosed as well, its value judgement becomes easy so that it is easy to obtain a supporter. In a case where the first country application is disclosed by the application information disclosing means by way of the Internet, when the content of the first country application is made into electronic data, it is easy to disclose the full text of the first country (patent) application as well.

③ In the above-described examples, the administrator company of the server computer S has played a role of the coordinator between the first country applicant and the supporter, however, in order to smoothly go on with the procedures, for example, at a stage when the first country applicant applies for the first country applicant recruiting means, it can be arranged as well to assign the filing right and the like in a second country to the administrator company.

It can be one in which, upon receiving support from the supporter who has applied for the supporter recruiting means, the administrator company carries out the second country application or the supporter himself or herself carries out the second country application.

In a case where the administrator company carries out the second country application to become a right holder, based on the right, it can carry out granting a license (right of use) or assigning the right to the supporter or a third party. In this instance, in a case where there are any profits, in order to divide the profits among the first country applicant, the administrator company, the supporter and the like, a contract can be stipulated in advance.

④ With respect to the first country application disclosed by the application information disclosing means, although a predetermined period has passed, when no supporter appears, when the number of remaining dates are less until the priority period, when the priority period expires and the like, the supporting conditions requested by the first country applicant, the administrator company and so forth can be eased properly. Moreover, it is likewise applicable after obtaining a right, in a case where no person who wishes to obtain the right appears, the licensing conditions, the assigning conditions and so on can be properly eased. Note that it is good to display these varied conditions, for example, in the application information disclosing page and the right information disclosing page.

So far, it has been mainly described on the foreign application supporting system, however, it is likewise applicable to the foreign application supporting method and the like. Anyway, in accordance with the present invention, with respect to a first country application which a medium- and small-sized corporation and so forth being in short of the human and capital resources have carried out, an opportunity expands in which a second country application (foreign application) corresponding to it is done. Then, it is possible to enrich the international protection and utilization of intellectual property rights than ever before.

## Claims

1. A foreign application supporting system being **characterized in that** it is provided with:
application information disclosing means for disclosing, after completing a first country application, an outline of the first country application at least upon receiving the provision of information regarding the first country application; and
supporter recruiting means for recruiting a supporter who judges, based on the content disclosed by the application information disclosing means, to wish to support a second country application.

2. The foreign application supporting system set forth in clause 1 of the scope of claim further provided with first country applicant recruiting means for recruiting a first country applicant who wishes a second country application on the content regarding the first country application after completing said first country application.

3. The foreign application supporting system set forth in clause 2 of the scope of claim, wherein said application information disclosing means is one which discloses based on information which said first country applicant who applies for said first country applicant recruiting means has input.

4. The foreign application supporting system set forth in clause 1 of the scope of claim, wherein said application information disclosing means is one which mentions or dually recites the outline of said first country application at least in English.

5. The foreign application supporting system set forth in clause 1 of the scope of claim, wherein said application information disclosing means is one which accompanies an assessment on said first country application.

6. The foreign application supporting system set forth in clause 5 of the scope of claim, wherein said first country application is a patent application.

7. The foreign application supporting system set forth in clause 1 of the scope of claim, wherein said application information disclosing means is provided with reader limiting means which enables only a member who has registered in advance to browse the content of said first country application.

8. The foreign application supporting system set forth in clause 1 of the scope of claim, wherein said application information disclosing means or said supporter recruiting means is provided with warning means for issuing a warning on a priority period regarding said first country application.

9. The foreign application supporting system set forth in clause 1 of the scope of claim further provided with right information disclosing means for disclosing right information regarding said first country application and/or said second country application.

10. The foreign application supporting system set forth in clause 1 or clause 9 of the scope of claim further provided with right holder recruiting means for recruiting a person who wishes to obtain a right regarding said first country application and/or said second country application based on the content disclosed by said application information disclosing means and/or said right information disclosing means.

11. The foreign application supporting system set forth in clause 10 of the scope of claim, wherein the right regarding said first country application and/or said second country application is either one of a priority right, a filing right, a license or an exclusive right.

12. The foreign application supporting system set forth in claim 2 of the scope of claim having a server computer comprising a storing device which stores information regarding said first country applicant recruiting means, said application information disclosing means and said supporter recruiting means, and an electric communication device which is communicable with the outside.

13. A foreign application supporting program being **characterized in that** it lets a computer function as:
application information disclosing means for disclosing, after completing a first country application, an outline of the first country application at least upon receiving the provision of information regarding the first country application; and
supporter recruiting means for recruiting a supporter who judges, based on the content disclosed by the application information disclosing means, to wish to support a second country application.

14. A computer-readable recording medium in which a foreign application supporting program is recorded, foreign application supporting program which is **characterized in that** it lets a computer function as:
application information disclosing means for disclosing, after completing a first country application, an outline of the first country application at least upon receiving the provision of information regarding the first country application; and
supporter recruiting means for recruiting a supporter who judges, based on the content disclosed by the application information disclosing means, to wish to support a second country application.

15. A computer for supporting a foreign application, computer which is **characterized in that** it functions as:
application information disclosing means for disclosing, after completing a first country application, an outline of the first country application at least upon receiving the provision of information regarding the first country application; and
supporter recruiting means for recruiting a supporter who judges, based on the content disclosed by the application information disclosing means, to wish to support a second country application.

16. A foreign application supporting method being **characterized in that** it is provided with:
an application information disclosing step for disclosing, after completing a first country application, an outline of the first country application at least upon receiving the provision of information regarding the first country application; and
a supporter recruiting step for recruiting a supporter who judges, based on the content disclosed by the application information disclosing step, to wish to support a second country application.

17. A readable-and-writable storing medium being **characterized in that** it is provided with:
an output file in which first country application information regarding a first country application is stored, the first country application information being displayable on a displaying device of a terminal computer; and
an input file in which support information is stored, support information which a supporter inputs from an input device of the terminal computer, supporter who has retrieved the first country application information from the output file, has let it display on the displaying device to browse and has come to wish to support a second country application regarding the first country application.
